# EUROPÄISCHE PATENTSCHRIFT

(11) **EP 2 702 677 B1**
(45) Veröffentlichungstag und Bekanntmachung des Hinweises auf die Patenterteilung: **02.01.2019**
(21) Anmeldenummer: 12726717.7
(22) Anmeldetag: 26.04.2012
(51) Int. Cl.: H02M 3/156, H02M 1/42, H05B 37/00

(54) **BETRIEBSGERÄT FÜR EIN LEUCHTMITTEL MIT EINER LEISTUNGSFAKTOR-KORREKTURSCHALTUNG**
OPERATING DEVICE FOR A LAMP, COMPRISING A POWER FACTOR CORRECTION CIRCUIT
BALLAST POUR UN LUMINAIRE DOTÉ D'UN CIRCUIT CORRECTEUR DE FACTEUR DE PUISSANCE

(30) Priorität: 29.04.2011 DE 102011100012
(43) Veröffentlichungstag der Anmeldung: 05.03.2014
(73) Patentinhaber: Tridonic GmbH & Co. KG, 6851 Dornbirn (AT)
(72) Erfinder: MITTERBACHER, Andre, 6850 Dornbirn (AT)
(74) Vertreter: Banzer, Hans-Jörg
(86) Internationale Anmeldenummer: PCT/AT2012/000117
(87) Internationale Veröffentlichungsnummer: WO 2012/145772

(56) Entgegenhaltungen:
- WO-A1-99/63414
- DE-A1-102009 034 350
- ROSETTO L ET AL: "CONTROL TECHNIQUES FOR POWER FACTOR CORRECTION CONVERTERS", PROCEEDINGS OF PEMC 1994,, 1. Januar 1994 (1994-01-01), Seiten 1310-1318, XP007920948,

## Beschreibung

Die vorliegende Erfindung betrifft ein Betriebsgerät für ein Leuchtmittel mit einer Leistungsfaktorkorrektur sowie ein Verfahren zum Betrieb eines Betriebsgeräts für ein Leuchtmittel mit Leistungsfaktorkorrektur. Insbesondere betrifft die Erfindung das technische Gebiet der Betriebsgeräte für ein Leuchtmittel aufweisend eine Leistungsfaktorkorrektur mittels eines Wechselspannung/Gleichspannung-Wandlers, wobei die Erfindung vorzugsweise für Betriebsgeräte bzw. elektronische Vorschaltgeräten für Leuchtmittel wie Leuchtdioden oder Gasentladungslampen geeignet ist.

Betriebsgeräte für ein Leuchtmittel sind nicht-linear, da sie eine Kombination aus einem Gleichrichter und einer nachgeschalteten Treiberschaltung, die als Wechselrichter oder Gleichspannungswandler ausgebildet ist und mit der das Leuchtmittel betrieben wird, aufweisen. Zudem ist die Kennlinie des Leuchtmittels häufig nicht-linear, wobei dies beispielsweise für Leuchtdioden oder auch Gasentladungslampen, insbesondere für Leuchtstofflampen, gilt. Demzufolge werden auch bei derartigen elektronischen Vorschaltgeräten oder sonstigen Betriebsgeräten für Leuchtmittel häufig Leistungsfaktor-Korrekturschaltungen eingesetzt, wobei dies auch deshalb empfehlenswert ist, da durch Normen die zulässige Rücksendung von Oberwellen in das Versorgungsnetz geregelt ist.

Eine Leistungsfaktorkorrektur ("Power Factor Correcion", PFC) wird eingesetzt, um Oberwellenströme in einem Eingangsstrom zu beseitigen bzw. zumindest zu verringern. Oberwellenströme können insbesondere bei nicht-linearen Verbrauchern, wie es beispielsweise Gleichrichter mit nachfolgender Glättung in Netzteilen sind, auftreten, da bei derartigen Verbrauchern der Eingangsstrom trotz der sinusförmigen Eingangsspannung in seiner Phase verschoben und nicht-sinusförmig verzerrt wird. Den dabei auftretenden höherfrequenten Oberschwingungen kann durch eine dem jeweiligen Gerät vorgeschaltete aktive oder getaktete Leistungsfaktorkorrektur-Schaltung entgegengewirkt werden, da die Leistungsfaktorkorrektur die nicht-lineare Stromaufnahme behebt und den Eingangsstrom so formt, dass er im Wesentlichen sinusförmig ist.

Für Leistungsfaktor-Korrekturschaltungen wird häufig eine Schaltungstopologie verwendet, die auf einem auch als Hochsetzsteller oder Aufwärtswandler bezeichneten Boost-Konverter beruht. Dabei wird eine mit einer gleichgerichteten Wechselspannung versorgte Induktivität oder Spule durch Einschalten/Ausschalten eines steuerbaren Schalters mit einem Eingangsstrom geladen bzw. entladen wird. Der Entladestrom der Induktivität fließt über eine Diode zu dem mit einer Ausgangskapazität gekoppelten Ausgang des Konverters, so dass am Ausgang eine gegenüber der Eingangsspannung erhöhte Gleichspannung abgegriffen werden kann. Ebenso sind jedoch auch andere Konverterarten in Leistungsfaktorkorrektur-Schaltungen üblich, wie beispielsweise Flyback-Konverter oder Buck-Konverter.

Eine derartige Leistungsfaktor-Korrekturschaltung kann in verschiedenen Betriebsmodi betrieben werden, welche anhand eines Boost-Konverters beispielhaft in "Control Techniques For Power Factor Correction Converters", L. Rossetto, G. Spiazzi, P. Tenti, Proc. of PEMC 94, Warsaw, Poland, pp. 1310-1318, 1994 beschrieben sind. Insbesondere ist ein Betrieb mit einem kontinuierlichen Strom durch die zuvor erwähnte Induktivität (so genannter "Continuous Conduction Mode", CCM), ein Betrieb mit einem diskontinuierlichen Induktivitäts- oder Spulenstrom ("Discontinuous Conduction Mode", DCM) oder ein Betrieb im Grenzbereich zwischen kontinuierlichem und diskontinuierlichem Strom durch die Induktivität ("Borderline Conduction Mode" oder "Boundary Conduction Mode", BCM) bekannt.

So wird beispielsweise beim BCM-Betrieb jedes Abfallen des Spulenstroms auf Null während der Entladephase der Spule als Anlass dafür genommen, eine neuen Schaltzyklus zu starten und den Schalter wieder einzuschalten, um die Spule erneut zu laden. Im DCM-Betrieb wird hingegen nach dem Abfallen des Spulenstroms auf Null während der Entladephase zunächst eine vorgegeben zusätzliche Zeit abgewartet, bis der Schalter erneut geschlossen wird.

Hinsichtlich der weiteren Details der einzelnen bekannten Betriebsmodi wird vollinhaltlich auf die oben genannte Veröffentlichung verwiesen.

Die einzelnen Betriebsmodi besitzen unterschiedliche Vorteile, so dass häufig abhängig von den Betriebsbedingungen der Leistungsfaktor-Korrekturschaltung während des Betriebs zwischen den jeweiligen Betriebsmodi gewechselt wird.

Dabei stellt sich grundsätzlich das Problem, den Übergang zwischen den einzelnen Betriebsmodi zuverlässig und mit einfachen Mitteln zu steuern.

Die Druckschrift WO 99/63414 A1 offenbart eine Leistungsfaktorkorrekturschaltung nach dem Oberbegriff des Anspruches 1, wobei eine Einschaltzeit eines Schalters zur Leistungsfaktorkorrektur eingestellt wird.

Die Druckschrift DE 10 2009 034350 A1 offenbart ein weiteres Beispiel einer Leistungsfaktorkorrekturschaltung mit einem steuerbaren Schaltmittel.

Der vorliegenden Erfindung liegt daher die Aufgabe zugrunde, eine Schaltung und ein Verfahren zur Leistungskorrektur für ein Betriebsgerät für Leuchtmittel bereitzustellen, wobei ein einfacher und insbesondere einstellbarer Wechsel zwischen den unterschiedlichen Betriebsmodi möglich ist. Insbesondere soll ein einfach einstellbarer Übergang zwischen dem DCM- und dem BCM-Betriebsmodus möglich sein.

Diese Aufgabe wird erfindungsgemäß durch ein Betriebsgerät für Leuchtmittel mit einer Leistungsfaktor-Korrekturschaltung gemäß Anspruch 1 und ein Verfahren zum Betrieb eines Betriebsgeräts für Leuchtmittel mit Leistungsfaktorkorrektur gemäß Anspruch 11 gelöst. Die abhängigen Ansprüche definieren vorteilhafte und bevorzugte Ausführungsformen der Erfindung.

Das erfindungsgemäße Betriebsgerät für Leuchtmittel mit einer Leistungsfaktor-Korrekturschaltung umfasst eine mit einem Eingangsanschluss gekoppelte Induktivität und ein steuerbares Schaltmittel, wobei durch Schließen und Öffnen des Schaltmittels die Induktivität wahlweise geladen bzw. entladen wird. Der beim Entladen der Induktivität auftretende Entladestrom wird zu einem Ausgangsanschluss der Schaltung geleitet. Darüber hinaus ist eine Steuereinheit vorgesehen, welche abhängig von der Ausgangsspannung eine Einschaltzeit zum Einschalten des Schaltmittels ermittelt und das Schaltmittels wahlweise gemäß mindestens einem ersten Betriebsmodus und einem zweiten Betriebsmodus ansteuert, wobei sie das Schaltmittel abhängig von der Dauer der ermittelten Einschaltzeit entweder gemäß dem ersten Betriebsmodus oder dem zweiten Betriebsmodus ansteuert.
Auf diese Weise ist mit einfachen Mitteln ein definierter Übergang zwischen den unterschiedlichen Betriebsmodi möglich.
Gemäß der Erfindung wird die Einschaltzeit für das Schaltmittel auf Grundlage eines Vergleichs einer abhängig von der Ausgangsspannung bestimmten Soll-Einschaltzeit mit einer Minimum-Einschaltzeit ermittelt, wobei insbesondere die Minimum-Einschaltzeit zur Anpassung des Übergangs zwischen dem ersten Betriebsmodus und dem zweiten Betriebsmodus veränderbar ist. Dies gewährleistet, dass der Übergang zwischen den Betriebsmodi auf einfache Art und Weise an unterschiedliche Betriebsbedingungen, insbesondere unterschiedliche Lastbedingungen, angepasst werden kann.
Bei dem ersten Betriebsmodus kann es sich insbesondere um einen Betrieb der Leistungsfaktor-Korrekturschaltung mit diskontinuierlichem Induktivitätsstrom ("Discontinuous Conduction Mode", DCM) und bei dem zweiten Betriebsmodus um einen Betrieb im Grenzbereich zwischen kontinuierlichem und diskontinuierlichem Strom ("Borderline Conduction Mode" oder "Boundary Conduction Mode", BCM) handeln. Grundsätzlich ist jedoch eine Anwendung der Erfindung auch auf andere Betriebsmodi einer Lastfaktor-Korrekturschaltung anwendbar.
Gemäß einem Ausführungsbeispiel der Erfindung steuert die Steuereinheit das Schaltmittel gemäß dem ersten Betriebsmodus an, falls die Soll-Einschaltzeit größer als die Minimum-Einschaltzeit ist, während sie ansonsten das Schaltmittel gemäß dem zweiten Betriebsmodus ansteuert.

Die Steuereinheit ist erfindungsgemäß derart ausgestaltet,dass sie im ersten Betriebsmodus die Differenz zwischen der Soll-Einschaltzeit und der Minimum-Einschaltzeit bestimmt und die Wartezeit bis zum Beginn eines neuen Entladezyklus der Induktivität, d.h. bis zum erneuten Schließen des Schaltmittels, abhängig von der Differenz ermittelt, wobei die Wartezeit abhängig von der Differenz insbesondere anhand einer vorgegebenen Kennlinie oder Tabelle, welche in der Steuereinheit hinterlegt ist, ermittelt werden kann.

Die erfindungsgemäße Schaltung dient insbesondere zur Leistungsfaktorkorrektur für einen Wechselspannung/Gleichspannung-Wandler, so dass es sich in diesem Fall bei der Eingangsspannung um eine gleichgerichtete Wechselspannung und bei der Ausgangsspannung um eine Gleichspannung handelt. Darüber hinaus ist die erfindungsgemäß Leistungsfaktor-Korrekturschaltung vorzugsweise gemäß der Topologie eines Boost-Konverters aufgebaut, so dass der Entladestrom der Induktivität über eine Diode dem mit einer Ausgangskapazität gekoppelten Ausgangsanschluss zugeführt wird. Selbstverständlich ist die Erfindung jedoch auch auf andere Konverter-Topologien anwendbar, welche in einer Leistungsfaktor-Korrekturschaltung Anwendung finden können.

Die erfindungsgemäße Steuereinheit ist vorzugsweise in Form einer integrierten Schaltung, insbesondere einer ASIC-Schaltung, ausgestaltet und weist lediglich einen gemeinsamen Messeingang zum Erfassen einer der Ausgangsspannung entsprechenden Messgröße und einer dem Strom durch die Induktivität bzw. einem Nulldurchgang dieses Stroms entsprechenden Messgröße auf, wobei darüber hinaus ein Ausgang der Steuereinheit zum Ausgeben des Steuersignals an das vorzugsweise in Form eines FET-Schalters ausgestalteten Schaltmittel vorhanden ist, so dass die Steuereinheit mit lediglich zwei Pins konzipiert werden kann.

Die erfindungsgemäße Leistungsfaktor-Korrekturschaltung ist insbesondere zum Betrieb in einem Betriebsgerät für ein Leuchtmittel oder zum Betrieb mit einem elektronischen Vorschaltgerät für ein Leuchtmittel ausgestaltet, wobei es sich bei dem Leuchtmittel um eine Entladungslampe, eine Leuchtstofflampe oder eine Leuchtdiode oder dergleichen handeln kann. Bei diesem Anwendungsfall ermöglicht die zuvor beschriebene Erfindung, dass die Leistungsfaktor-Korrekturschaltung auf einfache Art und Weise an unterschiedliche Leistungsniveaus oder Komponenten des jeweils verwendeten Betriebsgerät oder Vorschaltgeräts angepasst werden kann.

Die vorliegende Erfindung wird nachfolgend unter Bezugnahme auf die Zeichnungen anhand bevorzugter Ausführungsformen erläutert.
Fig. 1 zeigt eine Leistungsfaktor-Korrekturschaltung gemäß einem Ausführungsbeispiel der Erfindung,
Fig. 2 zeigt eine Darstellung zur Erläuterung eines "Boundary Conduction Mode"-Betriebs (BCM) der Leistungsfaktor-Korrekturschaltung,
Fig. 3 zeigt eine Darstellung zur Erläuterung eines "Discontinuous Conduction Mode"-Betriebs (DCM) der Leistungsfaktor-Korrekturschaltung,
Fig. 4 zeigt eine Darstellung zur Erläuterung eines Übergangs zwischen dem BCM-Betrieb und dem DCM-Betrieb gemäß einem bevorzugten Ausführungsbeispiel der Erfindung, und
Fig. 5 zeigt eine Darstellung zur Erläuterung der Bestimmung einer Wartezeit im DCM-Betrieb.

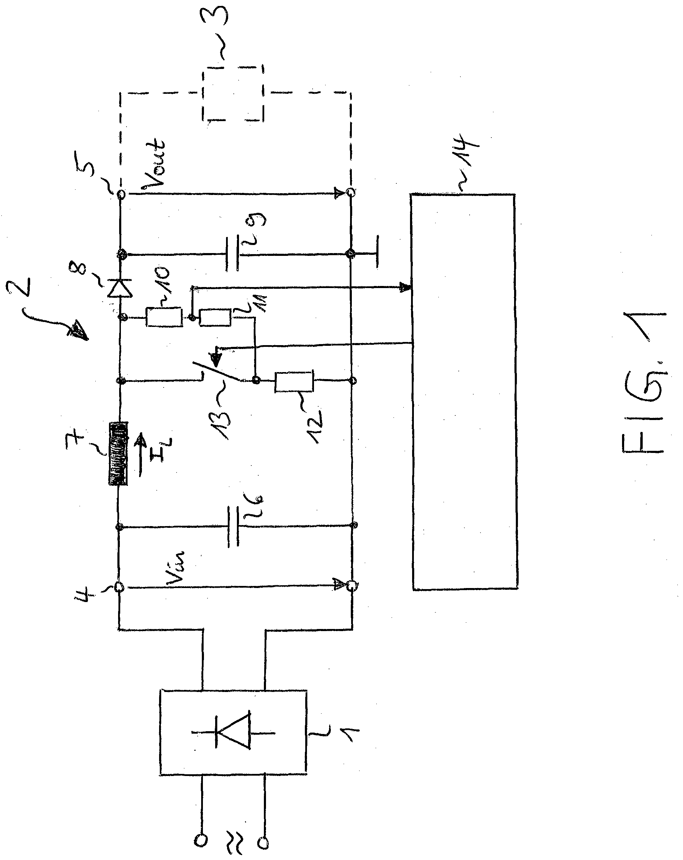

In Fig. 1 ist eine Leistungsfaktor-Korrekturschaltung 2 eines Betriebsgeräts für Leuchtmittel dargestellt. Die Leistungsfaktor-Korrekturschaltung 2 ist anhand eines Wechselspannung/Gleichspannung-Wandlers gemäß einem bevorzugten Ausführungsbeispiel der vorliegenden Erfindung dargestellt. Die weiteren Teile des Betriebsgeräts für Leuchtmittel sind nicht dargestellt, es ist nur symbolisch eine Last 3 dargestellt.

Dabei wird in Fig. 1 davon ausgegangen, dass eine Versorgungs-Wechselspannung, beispielsweise die Netzspannung, von einem Gleichrichter 1 in eine gleichgerichtete Wechselspannung umgesetzt wird, welche somit als Eingangs-Wechselspannung Vin zwischen einem Eingangsanschluss 4 der Leuchtmittel dargestellt. Die Leistungsfaktor-Korrekturschaltung 2 ist anhand eines Wechselspannung/Gleichspannung-Wandlers gemäß einem bevorzugten Ausführungsbeispiel der vorliegenden Erfindung dargestellt. Die weiteren Teile des Betriebsgeräts für Leuchtmittel sind nicht dargestellt, es ist nur symbolisch eine Last 3 dargestellt.

Dabei wird in Fig. 1 davon ausgegangen, dass eine Versorgungs-Wechselspannung, beispielsweise die Netzspannung, von einem Gleichrichter 1 in eine gleichgerichtete Wechselspannung umgesetzt wird, welche somit als Eingangs-Wechselspannung Vin zwischen einem Eingangsanschluss 4 der Leistungsfaktor-Korrekturschaltung 2 und Masse anliegt. Die Eingangs-Wechselspannung Vin wird von einem Glättungskondensator 6 gefiltert und einer Induktivität oder Spule 7 zugeführt. Die Induktivität 7 ist mit einer Diode 8 zwischen dem Eingangsanschluss 4 und einem Ausgangsanschluss der Leistungsfaktor-Korrekturschaltung in Serie geschaltet. An dem mit einem Ausgangs-Gleichspannungskondensator 9 gekoppelten Ausgangsanschluss 5 wird eine Ausgangs-Gleichspannung Vout bereitgestellt.

Die Ausgangs-Gleichspannung Vout dient zur Versorgung einer Last 3, welcher die Leistungsfaktor-Korrekturschaltung 2 vorgeschaltet ist. Bei der Last kann es sich beispielsweise um eine Treiberschaltung für ein Leuchtmittel wie beispielsweise eine Leuchtstofflampe, eine Halogen-Lampe, eine Leuchtdiodenanordnung etc. handeln. Typischerweise ist eine derartige Treiberschaltung als Wechselrichter oder auch als Gleichspannungswandler ausgebildet, welcher das Leuchtmittel betreibt. Beispielsweise kann die Treiberschaltung als Sperrwandler, isolierter Sperrwandler oder auch als resonante Halbbrücke ausgebildet sein. Die Treiberschaltung kann auch potentialgetrennt ausgebildet sein und beispielsweise einen Transformator aufweisen. Es können auch mehrer Treiberstufen zum Ansteuern eines oder mehrerer Leuchtmittel von der Leistungsfaktor-Korrekturschaltung 2 gespeist werden.

An die Verbindung zwischen der Induktivität 7 und der Diode 8 ist ein steuerbarer elektronischer Schalter 13, welcher beispielsweise in Form eines Feldeffekttransistors realisiert sein kann, angeschlossen, wobei der Schalter 13 bei der dargestellten Ausführungsform über einen Shunt-Widerstand 12 mit Masse verbunden ist. Parallel zu dem Schalter 13 ist eine Serienschaltung aus zwei Widerständen 10, 11 angeschlossen, welche mit einem Verbindungspunkt zwischen dem Schalter 13 und dem Shunt-Widerstand 12 verbunden ist. Die Widerstände 10, 11 weisen gegenüber dem Shunt-Widerstand 12 vorzugsweise deutlich größere Widerstandswerte auf.

Im eingeschalteten Zustand des Schalters 13 ist die Induktivität 7 über den Schalter 13 und den Shunt-Widerstand 12 mit Masse verbunden, wobei die Diode 8 sperrt, so dass die Induktivität 7 aufgeladen und Energie in der Induktivität gespeichert wird. Ist hingegen der Schalter 13 ausgeschaltet, d.h. offen, ist die Diode 8 leitend, so dass sich die Induktivität 7 über die Diode 8 in den Ausgangskondensator 9 entladen kann und die in der Induktivität 7 gespeicherte Energie in den Ausgangskondensator 9 übertragen wird.

Der Schalter 13 wird von einer Steuereinheit 14 angesteuert, welche vorzugsweise in Form einer integrierten Schaltung, insbesondere in Form eines ASIC, ausgestaltet ist. Die Leistungsfaktorkorrektur wird durch wiederholtes Ein- und Ausschalten des Schalters 13 mit einer deutlich höheren Frequenz als die Frequenz der gleichgerichteten Eingangs-Wechselspannung Vin erzielt. Die Frequenz der Einschalt- und Ausschaltvorgänge des Schalters 13 und somit der Lade- und Entladezyklen der Induktivität 7 kann typischerweise im Bereich mehrerer 10kHz liegen.

Bei der in Fig. 1 dargestellten Ausführungsform der Leistungsfaktor-Korrekturschaltung 2, welche auf der Topologie eines Boost-Konverters beruht (so dass die Ausgangsspannung Vout größer als die Eingangsspannung Vin ist), erfolgt das gezielte Ein- und Ausschalten des Schalters 13 und die Bestimmung der entsprechenden Einschaltdauer abhängig von der Ausgangsspannung Vout und insbesondere abhängig von dem Nulldurchgang des durch die Induktivität 7 fließenden Stroms I_{L}. In bestimmten Betriebsmodi, insbesondere im so genannten "Continuous Conduction Mode" mit einem kontinuierlichen Strom durch die Induktivität 7, kann jedoch auch ein Schalten abhängig von dem Erreichen anderer Strom-Grenzwerte erfolgen.

Bei der in Fig. 1 gezeigten Ausführungsform kann sowohl die Ausgangsspannung Vout als auch der Strom I_{L} durch die Induktivität 7 mit Hilfe lediglich einer Messschaltung überwacht werden, welche die bereits zuvor erwähnten Widerstände 10 und 11 umfasst, wobei ein Eingang der Steuereinheit 14 mit einem Messpunkt zwischen den beiden Widerständen 10, 11 verbunden ist.

Während des Einschaltens des Schalters 13 steigt der Strom I_{L} durch die Induktivität 7 linear an, wobei der Strom I_{L} über den Schalter 13 und den Shunt-Widerstand 12 nach Masse fließt, so dass der Spannungsabfall am Shunt-Widerstand 12 ein Maß für den Ladestrom und damit für den durch den Schalter 13 fließenden Strom ist. Da in der Ladephase der eingeschaltete Schalter 13 die Serienschaltung aus den Widerständen 10 und 11 kurzschließt, ist somit die an dem Eingang der Steuereinheit 14 anliegende Spannung ein Maß für den durch den Schalter 13 fließenden Strom I_{L}.

Wird der Schalter 13 ausgeschaltet, sinkt der Strom I_{L} durch die Induktivität 7 wieder linear ab und fließt über die Diode 8 zu der Last 3. Die Diode 8 ist während der Entladephase leitend, wobei sich die Ausgangsspannung Vout von der über die Widerstände 10-12 abfallenden Spannung geringfügig um den Spannungsabfall an der Diode 8 unterscheidet. Dieser Spannungsunterschied zwischen der Ausgangsspannung Vout und der am Verbindungspunkt zwischen der Induktivität 7 und dem Schalter 13 anliegenden Spannung wird erst dann signifikant, wenn sich der Entladestrom I_{L} der Nulllinie näher bzw. diese kreuzt. Bei diesem auch als "Zero Crossing Detection" (ZCD) bezeichneten Ereignis zeigt die am Verbindungspunkt zwischen der Induktivität 7 und dem Schalter 13 anliegende Spannung einen nach unten gerichteten Spannungsknick, während die Ausgangsspannung nahezu unverändert bleibt. Die während der Entladephase am Eingang der Steuereinheit 14 anliegende Spannung ist ein Maß für die über die Serienschaltung der Widerstände 10-12 abfallende Spannung. Von der Steuereinheit kann somit während des größten Teils der Entladephase durch Überwachung dieser Spannung die Ausgangsspannung Vout und am Ende der Entladephase ein ZCD-Ereignis bzgl. des Stroms I_{L} detektiert werden.

Die Steuereinheit 14 kann mit der Information über den Istwert der Ausgangsspannung Vout die nächste Einschaltdauer für den Schalter 13 bestimmen, wobei dies beispielsweise auf Grundlage eines Vergleichs der gemessenen Ausgangsspannung Vout mit einer festen Referenzspannung erfolgen kann. Abhängig von diesem Vergleichsergebnis wird die Einschaltdauer des Schalters 13 von der Steuereinheit 14 im Sinne einer Regelung entsprechend angepasst, um die gewünschte Ausgangsspannung zu erhalten.

Das Auftreten eines ZCD-Ereignisses im Verlauf des Stroms I_{L} wird hingegen genutzt, um den nächsten Einschaltzeitpunk für den Schalter 13 zu bestimmen. Dies kann abhängig von dem jeweiligen Betriebsmodus der Leistungsfaktor-Korrekturschaltung auf unterschiedliche Art und Weise erfolgen.

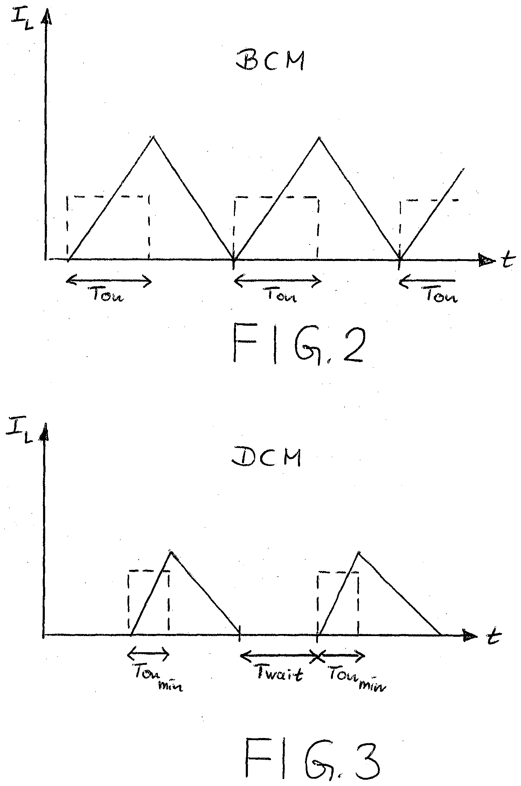

Fig. 2 zeigt beispielhaft den Verlauf des Stroms I_{L} für den Fall eines Betriebs im Grenzbereich zwischen kontinuierlichem und diskontinuierlichem Strom ("Boundary Conduction Mode", BCM). Bei diesem Steuerkonzept wird der Schalter 13 mit einer abhängig von dem Istwert der Ausgangsspannung Vout ermittelten Einschaltdauer Ton eingeschaltet, wobei das Einschalten des Schalters 13 immer dann erfolgt, wenn der Strom I_{L} durch die Induktivität 7 wieder auf Null abgesunken ist, so dass sich der in Fig. 2 gezeigte Stromverlauf ergibt. Der Zustand des Schalters 13 ist in Fig. 2 gestrichelt dargestellt. Der Konverter wird somit gleichsam im Grenzbereich zwischen einem Betrieb mit kontinuierlichem Strom und einem Betrieb mit einem diskontinuierlichem Strom betrieben.

Fig. 3 zeigt hingegen beispielhaft den Verlauf des Stroms I_{L} für einen Betrieb mit einem diskontinuerlichen Stromverlauf ("Discontinuous Conduction Mode", DCM). Ähnlich wie zu dem BCM-Betrieb von Fig. 2 steigt auch in diesem Fall der Strom bei Einschalten des Schalters 13 linear an, wobei jedoch bei Absinken des Stroms auf die Nulllinie nach Ausschalten des Schalters 13 nicht sofort ein neuer Schaltzyklus gestartet wird, sondern bis zum erneuten Einschalten des Schalters 13 wird eine zusätzliche Wartezeit Twait gewartet. Erst nach Ablauf dieser Wartezeit Twait wird der Schalter 13 wieder eingeschaltet, um die Induktivität 7 erneut aufzuladen. Somit ergibt sich der in Fig. 3 gezeigte diskontinuierliche Stromverlauf.

Der Übergang zwischen den in Fig. 2 und Fig. 3 gezeigten Betriebsmodi kann auf Grundlage der Einschaltzeit des Schalters 13, insbesondere auf Grundlage eines Vergleichs der von der Steuereinheit ermittelten Soll-Einschaltzeit für den Schalter 13 mit einer vorgebbaren Minimum-Einschaltzeit oder Mindest-Einschaltzeit Tonₘᵢₙ, erfolgen.

Wie zuvor erläutert worden ist, erfasst die Steuereinheit 14 im laufenden Betrieb den Istwert der Ausgangsspannung Vout und vergleicht diesen mit einem bestimmten Referenzwert. Abhängig von diesem Vergleichsergebnis ermittelt die Steuereinheit einen Sollwert für die Einschaltzeit, um durch entsprechende Ansteuerung des Schalters 13 die Ausgangsspannung auf den jeweils gewünschten Wert nachregeln zu können.

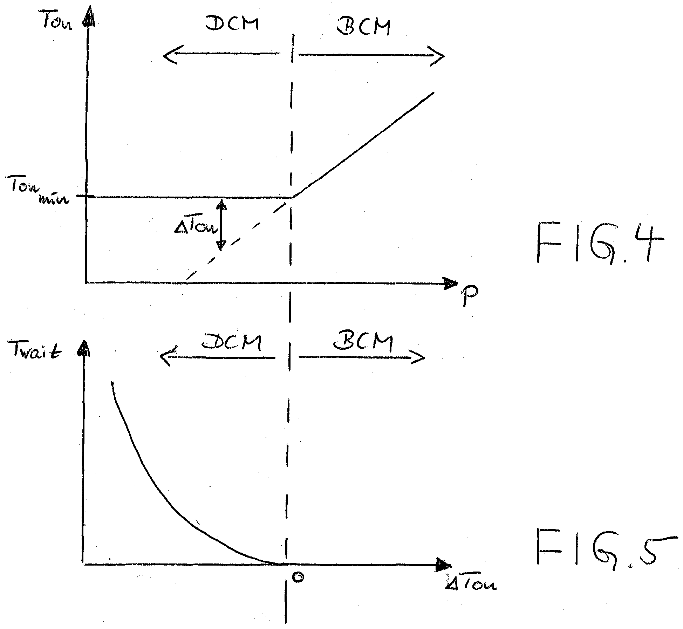

Wie in Fig. 4 gezeigt ist, ist gemäß dem bevorzugten Ausführungsbeispiel vorgesehen, dass die Leistungsfaktor-Korrekturschaltung 2 im BCM-Betrieb betrieben wird, falls die von der Steuereinheit ermittelte Soll-Einschaltzeit größer als die Minimum-Einschaltzeit Tonₘᵢₙ ist. In allen anderen Fällen erfolgt ein DCM-Betrieb.

Ebenfalls kann Fig. 4 entnommen werden, dass im Falle eines BCM-Betriebs die von der Steuereinheit ermittelte Soll-Einschaltzeit tatsächlich zur Ansteuerung des Schalters 13 ermittelt wird, so dass sich für den BCM-Betrieb der in Fig. 4 dargestellte linear ansteigende Verlauf für die Einschaltzeit Ton des Schalters 13 abhängig von der geforderten Ausgangsleistung P der Schaltung ergibt. Erfolgt jedoch ein DCM-Betrieb der Schaltung, wird der Schalter 13 konstant lediglich mit der Minimum-Einschaltzeit Tonₘᵢₙ eingeschaltet, d.h. die Einschaltdauer des Schalters 13 wird auf den Wert der Minimum-Einschaltzeit Tonₘᵢₙ beschränkt, wobei im DCM-Betrieb die Einstellung des gewünschten Betriebspunkts durch geeignete Wahl der Wartezeit Twait erfolgt.

Insgesamt ergibt sich somit abhängig von der jeweils geforderten Ausgangsleistung P der in Fig. 4 gezeigte Verlauf für die Einschaltzeit Ton des Schalters 13, wobei im DCM-Betrieb die Einschaltzeit Ton konstant auf den Wert der vorgegeben Minimum-Einschaltzeit Tonmin beschränkt ist, während im BCM-Betrieb die Einschaltzeit Ton der von der Steuereinheit 14 abhängig von der Ausgangsspannung Vout ermittelten Soll-Einschaltzeit entspricht und linear mit der geforderten Ausgangsleistung ansteigt. Auch in Fig. 3 ist die im Vergleich zu der in Fig. 2 gezeigten Einschaltzeit Ton des BCM-Betriebs verringerte Einschaltzeit Ton=Tonₘᵢₙ des DCM-Betriebs dargestellt.

Um einen einstellbaren Übergang zwischen dem DCM-Betrieb und dem BCM-Betrieb zu ermöglichen, ist bei der bevorzugten Ausführungsform der Wert der Minimum-Einschaltzeit Tonₘᵢₙ veränderbar, so dass von einem Nutzer durch geeignete Einstellung von Tonₘᵢₙ eine einfache Anpassung der Funktion der Leistungsfaktor-Korrekturschaltung an unterschiedliche Lastniveaus und unterschiedliche Lastkomponenten erzielt werden kann, so dass der Übergangspunkt zwischen DCM-Betrieb und BCM-Betrieb variabel entlang der Ton-Kennlinie verschoben werden kann So kann insbesondere vorgesehen sein, dass der Nutzer aus mehreren vorgegebenen Werten für Tonₘᵢₙ abhängig von der jeweils angeschlossenen Last auswählen kann. Ebenso ist jedoch auch eine stufenlose Einstellung des Werts für Tonₘᵢₙ denkbar.

Wie zuvor angedeutet worden ist, erfolgt im DCM-Betrieb die Einstellung des jeweils gewünschten Betriebspunkts aufgrund der auf Tonₘᵢₙ begrenzten Einschaltdauer des Schalters 13 durch geeignete Wahl bzw. Nachregelung der Wartezeit Twait. Die Steuereinheit 14 kann derart ausgestaltet sein, dass der interne Regler abhängig von dem bereits beschriebenen Vergleich des Istwerts der Ausgangsspannung Vout mit dem vorgegebenen Referenzwert lediglich einen Sollwert für die Einschaltzeit des Schalters 13 erzeugt, welcher wie zuvor anhand Fig. 4 erläutert abhängig von der jeweiligen Betriebsart verarbeitet wird. Um diesen Sollwert im DCM-Betrieb in einen geeigneten Wert für die Wartezeit Twait umzusetzen, wird - wie in Fig. 4 angedeutet - die Differenz ΔTon zwischen der von dem Regler der Steuereinheit 14 gelieferten Soll-Einschaltzeit und der Minimum-Einschaltzeit Tonₘᵢₙ ermittelt. Diese ΔTon-Information wird von der Steuereinheit schließlich in den jeweils geeigneten Wert für die Wartezeit Twait umgesetzt.

Fig. 5 zeigt beispielhaft den Verlauf einer Kennlinie, welche zur Umsetzung des Werts ΔTon in einen geeigneten Wert für die Wartezeit Twait angewendet werden kann. Aus Fig. 5 ist ersichtlich, dass im DCM-Betrieb die Wartezeit Twait mit abnehmender Differenz ΔTon zunimmt. Ebenso ist aus Fig. 5 ersichtlich, dass die Wartezeit Twait beim Übergang zum BCM-Betrieb auf Null absinkt, da im BCM-Betrieb per Definition kein Einschalten des Schalters 13 ohne zusätzlich Wartezeit erfolgt. Die in Fig. 5 gezeigte Kennlinie kann beispielsweise bei digitaler Ausgestaltung der Steuereinheit 14 in Form einer entsprechenden Tabelle in der Steuereinheit 14 hinterlegt sein.

## Patentansprüche

1. Betriebsgerät (3) für ein Leuchtmittel mit einer Leistungsfaktor-Korrekturschaltung (2), umfassend
- einen Eingangsanschluss (4) zum Empfangen einer Eingangsspannung (Vin),
- eine mit dem Eingangsanschluss (4) gekoppelte Induktivität (7),
- ein mit der Induktivität (7) gekoppeltes steuerbares Schaltmittel (13), um durch Schließen und Öffnen des Schaltmittels (13) die Induktivität (7) wahlweise zu laden und zu entladen,
- einen Ausgangsanschluss (5) zum Ausgeben einer Ausgangsspannung (Vout), und
- eine Steuereinheit (14) zum Ansteuern des Schaltmittels (13), wobei die Steuereinheit (14) derart ausgestaltet ist, dass sie abhängig von der Ausgangsspannung (Vout) eine Einschaltzeit (Ton) zum Einschalten des Schaltmittels (13) ermittelt und das Schaltmittel (13) wahlweise gemäß mindestens einem ersten Betriebsmodus und einem zweiten Betriebsmodus ansteuert,
wobei die Steuereinheit (14) derart ausgestaltet ist, dass sie die Einschaltzeit (Ton) für das Schaltmittel (13) auf Grundlage eines Vergleichs einer abhängig von der Ausgangsspannung bestimmten Soll-Einschaltzeit mit einer Minimum-Einschaltzeit (Tonₘᵢₙ) ermittelt und das Schaltmittel (13) abhängig von der Dauer der ermittelten Einschaltzeit (Ton) wahlweise gemäß dem ersten Betriebsmodus oder dem zweiten Betriebsmodus ansteuert, und
wobei die Steuereinheit (14) derart ausgestaltet ist, dass sie im ersten Betriebsmodus das Schaltmittel (13) für die Dauer der Minimum-Einschaltzeit (Tonₘᵢₙ) einschaltet, anschließend das Schaltmittel (13) ausschaltet und das Schaltmittel (13) erst wieder nach Ablauf einer Wartezeit (Twait) bei Feststellen eines Absinkens eines Stroms (I_{L}) durch die Induktivität (7) auf einen bestimmten Strom-Grenzwert beim Entladen der Induktivität (7) einschaltet,
**dadurch gekennzeichnet,**
**dass** die Steuereinheit (14) derart ausgestaltet ist, dass sie eine Differenz zwischen der Soll-Einschaltzeit und der Minimum-Einschaltzeit (Tonₘᵢₙ) bestimmt und die Wartezeit (Twait) abhängig von der Differenz ermittelt.

2. Betriebsgerät (3) für ein Leuchtmittel nach Anspruch 1,
**dadurch gekennzeichnet,**
**dass** die Minimum-Einschaltzeit (Tonₘᵢₙ) zur Anpassung eines Übergangs zwischen dem ersten Betriebsmodus und dem zweiten Betriebsmodus veränderbar ist.

3. Betriebsgerät (3) für ein Leuchtmittel nach Anspruch 2,
**dadurch gekennzeichnet,**
**dass** die Steuereinheit (14) derart ausgestaltet ist, dass sie das Schaltmittel (13) gemäß dem ersten Betriebsmodus ansteuert, falls die Soll-Einschaltzeit größer als die Minimum-Einschaltzeit (Tonₘᵢₙ) ist, während sie ansonsten das Schaltmittel (13) gemäß dem zweiten Betriebsmodus ansteuert.

4. Betriebsgerät (3) für ein Leuchtmittel nach einem der Ansprüche 1-3,
**dadurch gekennzeichnet,**
**dass** die Steuereinheit (14) derart ausgestaltet ist, dass sie im zweiten Betriebsmodus das Schaltmittel (13) für die Dauer der Soll-Einschaltzeit einschaltet, anschließend das Schaltmittel (13) ausschaltet und das Schaltmittel (13) erst wieder einschaltet, wenn beim Entladen der Induktivität (7) ein Strom (I_{L}) durch die Induktivität (7) auf einen bestimmten Strom-Grenzwert abgesunken ist.

5. Betriebsgerät (3) für ein Leuchtmittel nach einem der Ansprüche 1-4,
**dadurch gekennzeichnet,**
**dass** die Steuereinheit (14) die Wartezeit (Twait) abhängig von der Differenz anhand einer vorgegebenen Kennlinie ermittelt.

6. Betriebsgerät (3) für ein Leuchtmittel nach Anspruch 4.
**dadurch gekennzeichnet,**
**dass** der Strom-Grenzwert Null ist.

7. Betriebsgerät (3) für ein Leuchtmittel nach einem der vorhergehenden Ansprüche,
**dadurch gekennzeichnet,**
**dass** das steuerbare Schaltmittel (13) über eine Diode (8) mit dem Ausgangsanschluss (5) gekoppelt ist, so dass beim Entladen der Induktivität (7) ein Strom (I_{L}) durch die Induktivität (7) über die Diode (8) dem Ausgangsanschluss (5) zugeführt wird.

8. Betriebsgerät (3) für ein Leuchtmittel nach Anspruch 7,
**dadurch gekennzeichnet,**
**dass** der zweite Betriebsmodus ein Betriebsmodus mit einem Strom (I_{L}) durch die Induktivität (7) im Grenzbereich zwischen einem kontinuierlichen und einem diskontinuierlichen Strom ist.

9. Betriebsgerät (3) für ein Leuchtmittel nach Anspruch 7 oder 8,
**dadurch gekennzeichnet,**
**dass** der erste Betriebsmodus ein Betriebsmodus mit einem diskontinuierlichen Strom (I_{L}) durch die Induktivität (7) ist.

10. Betriebsgerät (3) für ein Leuchtmittel nach einem der Ansprüche 7-9,
**dadurch gekennzeichnet,**
**dass** mit der Steuereinheit (14) gekoppelte Erfassungsmittel (10-12) zum Erfassen einer der Ausgangsspannung (Vout) entsprechenden Messgröße und einer einem Nulldurchgang des Stroms (I_{L}) durch die Induktivität (7) entsprechende Messgröße vorgesehen sind.

11. Verfahren zum Betrieb eines Betriebsgeräts (3) für ein Leuchtmittel mit einer Leistungsfaktorkorrektur für einen Wechselspannung/Gleichspannung-Wandler (1, 2), umfassend die Schritte
- Anlegen einer Eingangsspannung (Vin) an eine Induktivität (7),
- wahlweise Laden und Entladen der Induktivität (7) durch Schließen und Öffnen eines mit der Induktivität (7) gekoppelten Schaltmittels (13),
- Ermitteln einer Einschaltzeit (Ton) für das Schaltmittel (13) abhängig von einer Ausgangsspannung (Vout) des Wandlers (1, 2), und
- Ansteuern des Schaltmittels (13) wahlweise gemäß mindestens einem ersten Betriebsmodus und einem zweiten Betriebsmodus abhängig von der Dauer der ermittelten Einschaltzeit (Ton),
wobei die Einschaltzeit (Ton) für das Schaltmittel (13) auf Grundlage eines Vergleichs einer abhängig von der Ausgangsspannung bestimmten Soll-Einschaltzeit mit einer Minimum-Einschaltzeit (Tonₘᵢₙ) ermittelt und das Schaltmittel (13) abhängig von der Dauer der ermittelten Einschaltzeit (Ton) wahlweise gemäß dem ersten Betriebsmodus oder dem zweiten Betriebsmodus angesteuert wird, und
wobei im ersten Betriebsmodus das Schaltmittel (13) für die Dauer der Minimum-Einschaltzeit (Tonₘᵢₙ) eingeschaltet, anschließend das Schaltmittel (13) ausgeschaltet und das Schaltmittel (13) erst wieder nach Ablauf einer Wartezeit (Twait) bei Feststellen eines Absinkens eines Stroms (I_{L}) durch die Induktivität (7) auf einen bestimmten Strom-Grenzwert beim Entladen der Induktivität (7) eingeschaltet wird,
**dadurch gekennzeichnet,**
**dass** eine Differenz zwischen der Soll-Einschaltzeit und der Minimum-Einschaltzeit (Tonₘᵢₙ) bestimmt und die Wartezeit (Twait) abhängig von der Differenz ermittelt wird.

12. Verfahren nach Anspruch 11,
**dadurch gekennzeichnet,**
**dass** das Verfahren mit einem Betriebsgerät (3) für ein Leuchtmittel nach einem der Ansprüche 1-10 durchgeführt wird.

## Claims

1. An operating device (3) for an illuminant with a power factor correction circuit (2), comprising
- an input connection (4) for receiving an input voltage (Vin),
- an inductor (7) coupled to the input connection (4),
- a controllable switch means (13) coupled with the inductor (7), in order to selectively charge or discharge the inductor (7) by closing and opening the switch means (13),
- an output connection (5) for outputting an output voltage (Vout), and
- a control unit (14) for controlling the switch means (13), wherein the control unit (14) is designed such that depending on an output voltage (Vout) it determines a switch-on time (Ton) for switching the switch means (13) on and controls the switch means (13) selectively according to at least one first operating mode and a second operating mode, wherein the control unit (14) is designed such that it determines the switch-on time (Ton) for the switch means (13) on the basis of a comparison of a target switch-on time determined depending on the output voltage with a minimum switch-on time (Tonₘᵢₙ) and selectively controls the switch means (13) depending on the duration of the determined switch-on time (Ton) according to the first operating mode or the second operating mode, and
wherein the control unit (14) is designed such that in the first operating mode it switches on the switch means (13) for the duration of the minimum switch-on time (Tonₘᵢₙ), then switches off the switch means (13) and only switches the switch means (13) back on again after expiration of a wait time (Twait) for detecting a lowering of a current (lL) through the inductor (7) to a specific current-limit when discharging the inductor (7),
**characterized in**
**that** the control unit (14) is designed such that it determines a difference between the target switch-on time and the minimum switch-on time (Tonₘᵢₙ) and determines the wait time (Twait) depending on the difference.

2. An operating device (3) for an illuminant according to Claim 1,
**characterized in**
**that** the minimum switch-on time (Tonₘᵢₙ) for adapting a transition between the first operating mode and the second operating mode can be varied.

3. An operating device (3) for an illuminant according to Claim 2,
**characterized in**
**that** the control unit (14) is designed such that it controls the switch means (13) according to the first operating mode, if the target switch-on time is greater than the minimum switch-on time (Tonₘᵢₙ), while it otherwise controls the switch means (13) according to the second operating mode.

4. An operating device (3) for an illuminant according to any one of Claims 1-3,
**characterized in**
**that** the control unit (14) is designed such that in the second operating mode it switches on the switch means (13) for the duration of the target switch-on time, then switches the switch means (13) off and only switches the switch means (13) back on again, if when discharging the inductor (7) a current (I_{L}) through the inductor (7) is lowered to a specific current limit.

5. An operating device (3) for an illuminant according to any one of Claims 1-4,
**characterized in**
**that** the control unit (14) determines the wait time (Twait) depending on the difference using a predetermined characteristic curve.

6. An operating device (3) for an illuminant according to Claim 4,
**characterized in**
**that** the current-limit is zero.

7. An operating device (3) for an illuminant according to any one of the preceding claims,
**characterized in**
**that** the controllable switch means (13) is coupled via a diode (8) with the output connection (5), so that when discharging the inductor (7) a current (I_{L}) is supplied via the diode (8) to the output connection (5).

8. An operating device (3) for an illuminant according to Claim 7,
**characterized in**
**that** the second operating mode is an operating mode with a current (I_{L}) through the inductor (7) in the border area between a continuous and a discontinuous current.

9. An operating device (3) for an illuminant according to Claim 7 or 8,
**characterized in**
**that** the first operating mode is an operating mode with a discontinuous current (I_{L}) through the inductor (7).

10. An operating device (3) for an illuminant according to any one of Claims 7-9,
**characterized in**
**that** detection means (10-12) coupled with the control unit (14) are provided for detecting a measured variable corresponding to the output voltage (Vout) and a measured variable corresponding to a zero-crossing of the current (I_{L}) through the inductor (7).

11. A method for operating an operating device (3) for an illuminant with a power factor correction for an alternating voltage/direct voltage converter (1, 2), comprising the steps
- applying an input voltage (Vin) to an inductor (7),
- selectively charging and discharging the inductor (7) by closing and opening a switch means (13) coupled with the inductor (7),
- determining a switch-on time (Ton) for the switch means (13) depending on an output voltage (Vout) of the converter (1, 2), and
- controlling the switch means (13) selectively according to at least one first operating mode and a second operating mode depending on the duration of the determined switch-on time (Ton),
wherein the switch-on time (Ton) for the switch means (13) is determined on the basis of a comparison of a target switch-on time determined depending on the output voltage with a minimum switch-on time (Tonₘᵢₙ) and the switch means (13) is selectively controlled depending on the duration of the determined switch-on time (Ton) according to the first operating mode or the second operating mode, and
wherein in the first operating mode the switch means (13) is switched on for the duration of the minimum switch-on time (Tonₘᵢₙ), then the switch means (13) is switched off and the switch means (13) is only switched back on again after expiration of a wait time (Twait) for detecting a lowering of a current (I_{L}) through the inductor (7) to a specific current limit when discharging the inductor (7),
**characterized in**
**that** a difference between the target switch-on time and the minimum switch-on time (Tonₘᵢₙ) is determined and the wait time (Twait) is determined depending on the difference.

12. A method according to Claim 11,
**characterized in**
**that** the method is carried out with an operating device (3) for an illuminant according to any one of Claims 1-10.

## Revendications

1. Appareil de commande (3) pour un moyen d'éclairage avec un circuit de correction de facteur de puissance (2), comprenant :
- un raccord d'entrée (4) pour la réception d'une tension d'entrée (Vin),
- une inductance (7) couplée au raccord d'entrée (4),
- un moyen de commutation (13) contrôlable couplé avec l'inductance (7), afin de charger et de décharger sélectivement l'inductance (7) par la fermeture et l'ouverture du moyen de commutation (13),
- un raccord de sortie (5) pour la génération d'une tension de sortie (Vout) et
- une unité de commande (14) pour le contrôle du moyen de commutation (13), l'unité de commande (14) étant conçue de façon à ce qu'elle détermine, en fonction de la tension de sortie (Vout), un temps de mise en marche (Ton) pour la mise en marche du moyen de commutation (13) et contrôle le moyen de commutation (13) sélectivement selon au moins un premier mode de fonctionnement et un deuxième mode de fonctionnement,
l'unité de commande (14) étant conçue de façon à ce qu'elle détermine le temps de mise en marche (Ton) pour le moyen de commutation (13) sur la base d'une comparaison entre un temps de mise en marche de consigne déterminé en fonction de la tension de sortie et un temps de mise en marche minimum (Tonₘᵢₙ) et contrôle le moyen de commutation (13) en fonction de la durée du temps de mise en marche (Ton) déterminé sélectivement selon le premier mode de fonctionnement ou le deuxième mode de fonctionnement et
l'unité de commande (14) étant conçue de façon à ce que, dans le premier mode de fonctionnement, elle mette en marche le moyen de commutation (13) pour la durée du temps de mise en marche minimum (Tonₘᵢₙ) puis qu'elle arrête le moyen de commutation (13) et ne remette en marche le moyen de commutation (13) qu'après l'écoulement d'un temps d'attente (Twait) lors de la détection d'une diminution d'un courant (I_{L}) à travers l'inductance (7) à une valeur limite de courant déterminée lors de la décharge de l'inductance (7),
**caractérisé en ce que**
l'unité de commande (14) est conçue de façon à ce qu'elle détermine une différence entre le temps de mise en marche de consigne et le temps de mise en marche minimum (Tonₘᵢₙ) et déterminer le temps d'attente (Twait) en fonction de la différence.

2. Appareil de commande (3) pour un moyen d'éclairage selon la revendication 1,
**caractérisé en ce que**
le temps de mise en marche minimum (Tonₘᵢₙ) peut être modifié pour l'adaptation d'une transition entre le premier mode de fonctionnement et le deuxième mode de fonctionnement.

3. Appareil de commande (3) pour un moyen d'éclairage selon la revendication 2,
**caractérisé en ce que**
l'unité de commande (14) est conçue de façon à ce qu'elle commande le moyen de commutation (13) selon le premier mode de fonctionnement dans le cas où le temps de mise en marche de consigne est supérieur au temps de mise en marche minimum (Tonₘᵢₙ) tandis qu'elle commande sinon le moyen de commutation (13) selon le deuxième mode de fonctionnement.

4. Appareil de commande (3) pour un moyen d'éclairage selon l'une des revendications 1 à 3,
**caractérisé en ce que**
l'unité de commande (14) est conçue de façon à ce que, dans le deuxième mode de fonctionnement, elle mette en marche le moyen de commutation (13) pendant la durée du temps de mise en marche de consigne puis arrête le moyen de commutation (13) et ne remette en marche le moyen de commutation (13) que lorsque, lors de la décharge de l'inductance (7), un courant (I_{L}) à travers l'inductance (7) a diminué à une valeur limite de courant déterminée.

5. Appareil de commande (3) pour un moyen d'éclairage selon l'une des revendications 1 à 4,
**caractérisé en ce que**
l'unité de commande (14) détermine le temps d'attente (Twait) en fonction de la différence à l'aide d'une courbe caractéristique prédéterminée.

6. Appareil de commande (3) pour un moyen d'éclairage selon la revendication 4,
**caractérisé en ce que**
la valeur limite de courant est égale à zéro.

7. Appareil de commande (3) pour un moyen d'éclairage selon l'une des revendications précédentes,
**caractérisé en ce que**
le moyen de commutation contrôlable (13) est couplé par l'intermédiaire d'une diode (8) avec le raccord de sortie (5) de façon à ce que, lors de la décharge de l'inductance (7), un courant (I_{L}) à travers l'inductance (7) soit introduit dans le raccord de sortie (5) par l'intermédiaire de la diode (8).

8. Appareil de commande (3) pour un moyen d'éclairage selon la revendication 7,
**caractérisé en ce que**
le deuxième mode de fonctionnement est un mode de fonctionnement avec un courant (I_{L}) à travers l'inductance (7) dans la zone limite entre un courant continu et un courant discontinu.

9. Appareil de commande (3) pour un moyen d'éclairage selon la revendication 7 ou 8,
**caractérisé en ce que**
le premier mode de fonctionnement est un mode de fonctionnement avec un courant discontinu (I_{L}) à travers l'inductance (7).

10. Appareil de commande (3) pour un moyen d'éclairage selon l'une des revendications 7 à 9,
**caractérisé en ce que**
des moyens de mesure (10 - 12) couplés avec l'unité de commande (14) sont prévus pour la mesure d'une grandeur de mesure correspondant à la tension de sortie (Vout) et d'une grandeur de mesure correspondant à un passage à zéro du courant (I_{L}) à travers l'inductance (7).

11. Procédé de commande d'un appareil de commande (3) pour un moyen d'éclairage avec une correction de facteur de puissance pour un convertisseur tension alternative / tension continue (1, 2), comprenant les étapes suivantes :
- application d'une tension d'entrée (Vin) à une inductance (7),
- charge et décharge sélective de l'inductance (7) par la fermeture et l'ouverture d'un moyen de commutation (13) couplé avec l'inductance (7),
- détermination d'un temps de mise en marche (Ton) pour le moyen de commutation (13) en fonction d'une tension de sortie (Vout) du convertisseur (1, 2) et
- contrôle du moyen de commutation (13) de manière sélective selon au moins un premier mode de fonctionnement et un deuxième mode de fonctionnement en fonction de la durée du temps de mise en marche (Ton) déterminé,
le temps de mise en marche (Ton) pour le moyen de commutation (13) étant déterminé sur la base d'une comparaison entre un temps de mise en marche de consigne déterminé en fonction de la tension de sortie et un temps de mise en marche minimum (Tonₘᵢₙ) et le moyen de commutation (13) étant contrôlé en fonction de la durée du temps de mise en marche (Ton) déterminé sélectivement selon le premier mode de fonctionnement ou le deuxième mode de fonctionnement et
dans le premier mode de fonctionnement, le moyen de commutation (13) est mis en marche pour la durée du temps de mise en marche minimum (Tonₘᵢₙ) puis le moyen de commutation (13) est arrêté et le moyen de commutation (13) n'est remis en marche qu'après l'écoulement d'un temps d'attente (Twait) lors de la détection d'une diminution d'un courant (I_{L}) à travers l'inductance (7) à une valeur limite de courant déterminée lors de la décharge de l'inductance (7),
**caractérisé en ce que**
une différence entre le temps de mise en marche de consigne et le temps de mise en marche minimum (Tonₘᵢₙ) est déterminée et le temps d'attente (Twait) est déterminé en fonction de la différence.

12. Procédé selon la revendication 11,
**caractérisé en ce que**
le procédé est exécuté avec un appareil de commande (3) pour un moyen d'éclairage selon l'une des revendications 1 à 10.
